# EUROPEAN PATENT APPLICATION

(11) **EP 2 506 197 A1**
(43) Date of publication of application: **03.10.2012**
(21) Application number: 11425091.3
(22) Date of filing: 31.03.2011
(51) Int. Cl.: G06Q 10/00

(54) **Method and apparatus for management and control of digital evidence analysis**

(71) Applicant: DF Labs S.r.l., 20123 Milano (IT)
(72) Inventor: Forte, Dario Valentino, 26038 Torre de' Picenardi (CR) (IT)

(57) **Abstract**

A method and an apparatus for conducting forensic analyses. The invention supports the entire investigation management process from obtainment of information required for the investigation and evidence validity verification to the production of a final report. Specifically, the invention proposes a method and an apparatus for storing, recovering, preserving and tracing any item of information involved in an IT-based investigation.

## Description

### CONTEXT OF THE INVENTION

The invention proposes a method and an apparatus for conducting forensic analyses. The invention supports the entire investigation management process, from evidence validity verification to the obtainment of information required for the investigation and the production of a final case report. Specifically, the invention proposes a method and an apparatus for storing, recovering, preserving and tracing any piece of information involved in an IT-based investigation.

### DESCRIPTION OF THE STATE OF THE ART

In modern-day judicial systems, digital evidence represents a fundamental element in legal disputes or court cases. Evidence must be collected, stored and analyzed in compliance with all standards, regulations or laws in force and this state of compliance must constantly be monitored. In order to be admissible in a court of law, any given document or object must comply with specific laws applicable to the acquisition, preservation and processing of evidence. In other words, the evidence must remain authentic and every step in its chain of custody must be committed to the record and preserved.

After being acquired, an item of evidence is processed and analyzed by different individuals. For example, a piece of evidence may be processed by an investigator, a police officer, a lawyer, a witness or by people tasked with managing that piece of evidence. These figures may co-exist within a single organization or operate within completely separate structures, cities or even nations. The great variety of different figures who may interact with a piece of evidence means that maintaining authenticity while sharing the results obtained by each of them during the analysis process becomes quite complicated. Indeed, the different physical or geographical locations of the individual operators makes it very problematic―if not almost impossible―to exchange information on a given item of evidence.

If the authenticity of a piece of evidence is challenged, it may not be admissible into a court of law. In some cases, for specific crimes, the inappropriate use or processing of a piece of evidence (tampering) may be punishable by imprisonment.

The delicate nature of the evidence management process is accentuated when this evidence is in digital format, e.g., stored in a memory unit such as a computer hard disk, on a compact disk (CD) or on some other form of digital storage media. If not properly managed, this digital evidence can easily be corrupted or even destroyed, thus compromising the results of any analyses performed on it. Increasingly short response times to information incidents are demanded in order to ensure continuity of the operational flow. The lack of a centralized system for collecting information and rendering it usable and of an alternative communication channel renders information exchange difficult and inefficient and slows the evidence analysis process.

The use of a variety of different tools to carry out analysis also makes it difficult to collect the information in a structured and well organized way. Since the information contained in separate documents or files is processed and analyzed by different operators and by separate programs/applications, it is essential that the results of each individual instance of analysis can be correlated to a specific operator.

The execution of forensic analyses on a given piece of evidence by different noncommunicating or non-interconnected computers obliges investigators to allocate as many different digital storage devices as there are investigators and to carry out the same indexing operations in parallel in order to obtain homogeneously valid results. Such limitations demand a significant commitment of resources, both financial (acquisition of digital media to store the evidence to be analyzed) and in terms of time (investigators have to wait to begin the investigation until all evidence pre-indexing has been completed).

Forensic analyses of evidence may require the use of various different analysis tools designed to handle different aspects of the analysis process. The investigators must thus collect all the different outputs produced by the individual tools and collate them to create the final investigation report. There is thus a need for a tool with easily expandable functionalities that makes it possible to encompass various external tools within one analysis framework that ensures a unified and seamless reporting system.

There is thus a need for a system that allows individuals working at different and separated workstations to access evidence and carry out investigations without affecting the authenticity of said evidence that also provides a method that reduces processing times for evidence information that does not change.

### SUMMARY OF THE INVENTION

The present invention is a method and an apparatus for managing information security cases and forensic analyses of evidence and associated information. The method and apparatus comprise the creation (opening) of a case and the association of evidence and information with it, and the digital storage of all evidence within a database. All information or evidence is kept associated with the respective case.

The invention assists the user/operator (administrator, investigator) through all the steps necessary in proper forensic analysis procedures, focusing attention on aspects that are required by standards, regulations and laws in force. Given that the information in these cases is of a sensitive nature, the invention introduces a system of user profiling in order to provide well-defined and granular access to the information contained in the system. This characteristic responds to security and access segregation requisites provided for in international legislation regarding both private enterprises and governmental bodies.

### BRIEF DESCRIPTION OF FIGURES

The specifications described above are analyzed in greater detail in the following flowcharts and screenshots of the invention. The graphic materials illustrate only certain applications of the invention and should not be considered as representing the totality of its characteristics. The invention can be applied dynamically to other contexts of use.
Fig. 1 is a flowchart representing the model execution of the method for user authentication by the invention;
Fig. 2 is a flowchart representing the model execution of the method for adding information to a case;
Fig. 3 is a flowchart representing the model execution of the method for assigning investigators to a case;
Fig. 4 is a flowchart representing the model execution of the method for accessing forensic analysis functions;
Fig. 5 is a flowchart representing the model execution of the method for adding a new piece of evidence to a case;
Fig. 6 is a flowchart representing the model execution of the method for verifying the integrity of a new piece of evidence;
Fig. 7 is a flowchart representing the model execution of the method for evidence indexing;
Fig. 8 is a flowchart representing the model execution of the method for data carving;
Fig. 9 is a flowchart representing the model execution of the method for accessing the file analysis section;
Fig. 10 is a flowchart representing the model execution of the method for filtering content in the file analysis section;
Fig. 11 is a flowchart representing the model execution of the method for applying a plug-in to a file in the file analysis section;
Fig. 12 is a flowchart representing the model execution of the method for selecting the display mode of file content;
Fig. 13 is a flowchart representing the model execution of the method for timeline analysis;
Fig. 14 is a flowchart representing the model execution of the method for keyword analysis;
Fig. 15 is a flowchart representing the model execution of the method for running the picture gallery;
Fig. 16 is a flowchart representing the model execution of the method for verifying hashsets;
Fig. 17 is a flowchart representing the model execution of the method for verifying details associated with a selected piece of evidence;
Fig. 18 is a flowchart representing the model execution of the method for carrying out low level "data unit" analyses;
Fig. 19 is a flowchart representing the model execution of the method for bookmark access and management;
Fig. 20 is a flowchart representing the model execution of the method for accessing the reporting section;
Fig. 21 is a flowchart representing the model execution of the method for accessing the RAM analysis section;
Fig. 22 is a flowchart representing the model execution of the method for accessing the user configuration section;
Fig. 23 is a flowchart representing the model execution of the method for accessing the logging section;
Fig. 24 is a flowchart representing the model execution of the method for accessing the hashset configuration section;
Fig. 25 is a flowchart representing the model execution of the method for accessing the plug-in configuration section.

### DETAILED DESCRIPTION OF INVENTION

The principal purpose of the invention is to manage all the information comprising and defining a case. All suitably credentialed operators are able to access information or evidence and make their contribution by adding or modifying details and by carrying out forensic analyses. In accordance with the purpose of the invention, the operator enters information, giving each item an unambiguous identification; each element entered and stored within the invention has its own identification code distinguishing it from every other piece of information or evidence. After creating a case, the operator is able to add evidence. After having added evidence, an investigator is able to carry out specific preliminary operations that speed up subsequent analysis phases. Among the possible preliminary operations is timestamp analysis of files (timeline analysis), extraction of file type, calculation of MD5 and SHA1 hash values, keyword extraction and data carving. The invention can be distributed on a heterogeneous and geographically scattered network. Given the operational design of the invention, it can be accessed via different devices, including, but not limited to, computers, PDAs, or mobile phones. A server may be specially dedicated to storing evidence or the direct storage function may be enabled. This description illustrates just one of the many configuration possibilities at both the storage and the network level. The invention can function in a variety of environments such as distributed systems, centralized systems, stand alone computers or similar devices.

The system comprises a plurality of client computers connected to the central server via conventional network communication channels. The system server is connected to the ICT network and provides the application and allows access to the data and to other connected client resources. Communication may take place over wired or wireless infrastructure or a combination of the two. Connected systems may be of various type, such as wireless or other similar devices.

The system server is composed of at least one central processing unit (CPU). The CPU in turn may be composed of one or more microprocessors. The server memory may contain a random access memory (RAM), a removable mass storage device, a flash memory and various combinations of common storage devices. The memory generally contains the operating system of the system server. In the case of the proposed invention, the system server also contains the software for the invention, the database and other software packets that provide invention functionalities. The operating system can be any of the commonly available UNIX operating systems such as, but not limited to, Ubuntu Server, CentOS, BSD or Sun Polaris. The database management system includes a database implemented according to the rules of relational databases.

To support the operations and functions of the invention, the memory may be partially used as a cache memory for temporary storage of information. The invention is able to use the memory for storage, visualization or modification of information contained in it.

For the proper use of the invention, the client system must have at least one CPU and one random access memory. Furthermore, it must be outfitted with a common browser for Internet navigation. Examples include Microsoft Internet Explorer, Mozilla Firefox, Apple Safari or Google Chrome.

During the normal use of the invention it is possible to for multiple connected clients in different physical or geographical locations to use the invention. The entire operation flow guarantees that the evidence is stored in a way that prevents any sort of alteration and that the chain of custody is maintained and verified. The invention is able to allow more than one mode of access to the data, such as, for example, administrator mode or user mode. The invention is able to store, display, trace, or remove information and manage user accounts. In brief, a user may request an account, access the system with the account and view only the information or evidence associated with that specific account. The invention is thus able to differentiate access to the software and assign different access privileges to information or evidence stored in the database for one or more users/operators (administrators and/or investigators).

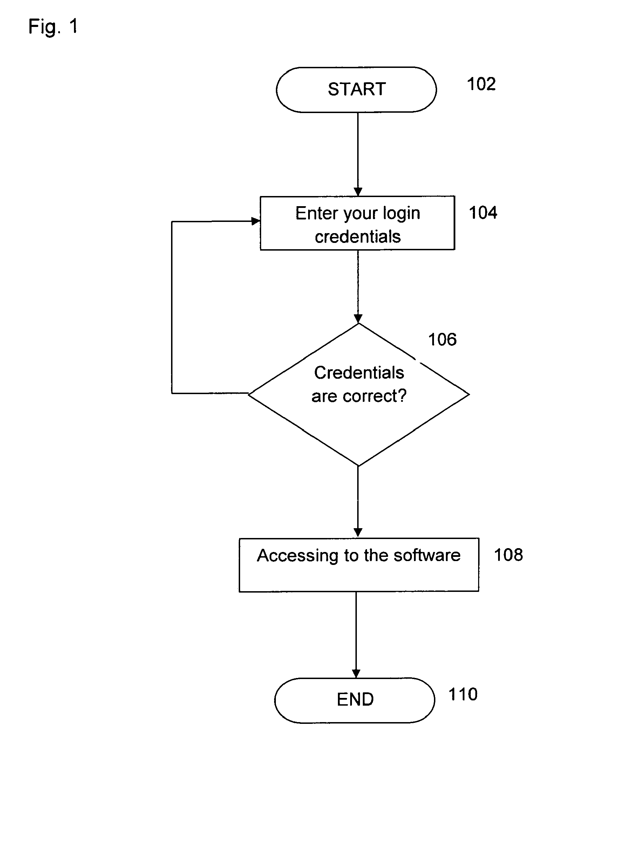

Fig. 1 is a flowchart that shows an example execution of the method for managing the login phase to the instrument. The method begins at step 102 and proceeds to step 104, where the user provides credentials to access the invention. In step 106, the access credentials are checked. If the credentials are accepted, the method proceeds to step 108; if not accepted the method returns to step 104. The method terminates at step 110.

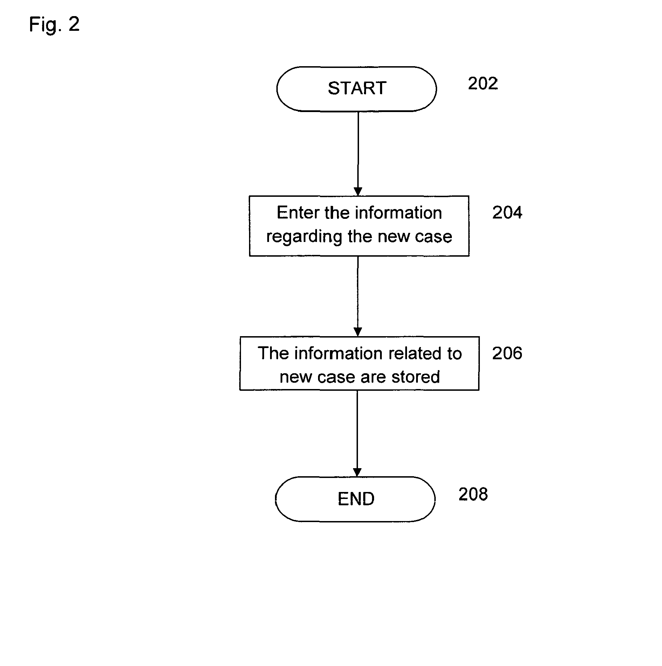

Fig. 2 is a flowchart illustrating how information associated with a case is managed. The method begins at step 202 and proceeds to step 204, where the investigator, in this case the administrator, enters the case information. At step 206, the method creates all the records corresponding to the individual pieces of information that comprise the case and proceeds to store the acquired information in the database. The method ends at step 208.

The case creation screen may have different fields. These may include, but are not limited to, case name and case description. After having entered the information, the "create" button is pressed to save the information to the database. The different buttons allow the administrator to add new evidence to a case, assign investigators to a case, view case information, remove a case from the database and block investigator access to the case.

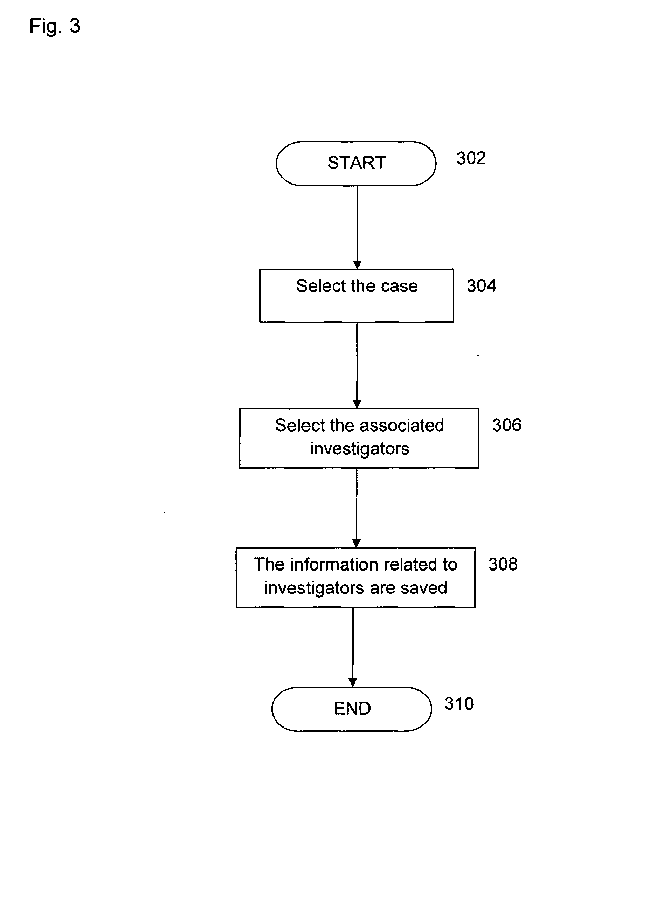

Fig. 3 is a flowchart that shows the model execution of the method for associating a new investigator with a case. The method begins at step 302 and proceeds to step 304, where the user-again the administrator-is asked to select the case on which to work. At step 306 the administrator is able to choose investigators to assign to the case. The method proceeds to step 308, where the assignments are saved to the database. The method terminates at step 310.

The screen where investigators are associated with a case is of fundamental importance. Two lists are provided: one with available investigators not yet assigned to the given case and the other with those currently assigned to the case. To add/remove an investigator, the administrator simply drags the investigator's name from one list to the other. After having made all necessary changes, the administrator hits the "save" button to make all modifications effective.

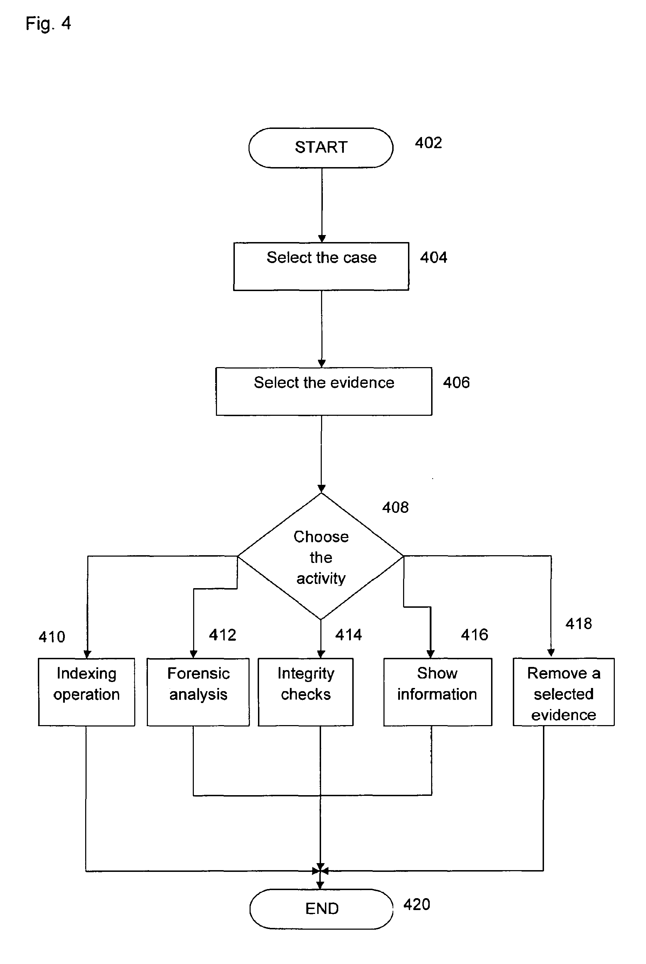

Fig. 4 is a flowchart that shows the model execution of the method for managing evidence associated with a case. The method begins at step 402 and proceeds to step 404, where the investigator selects the case on which he or she wishes to work. The method then proceeds to step 406, where the investigator selects the evidence on which to work. At step 408, the investigator selects the operations to perform on the selected evidence. Step 410 is where indexing takes place. The method then proceeds to the analysis section 412, integrity control 414, and information recovery 416. Step 418 is used to remove a piece of evidence from a case. The method terminates at step 420.

The section for associating evidence with a case is of fundamental importance. The screen shows all evidence that has already been added to the selected case. Buttons allow the operator to access the screens for indexing operations, forensic analysis, integrity control, summary of information entered when the item of evidence was added, or elimination from the case of the selected piece of evidence.

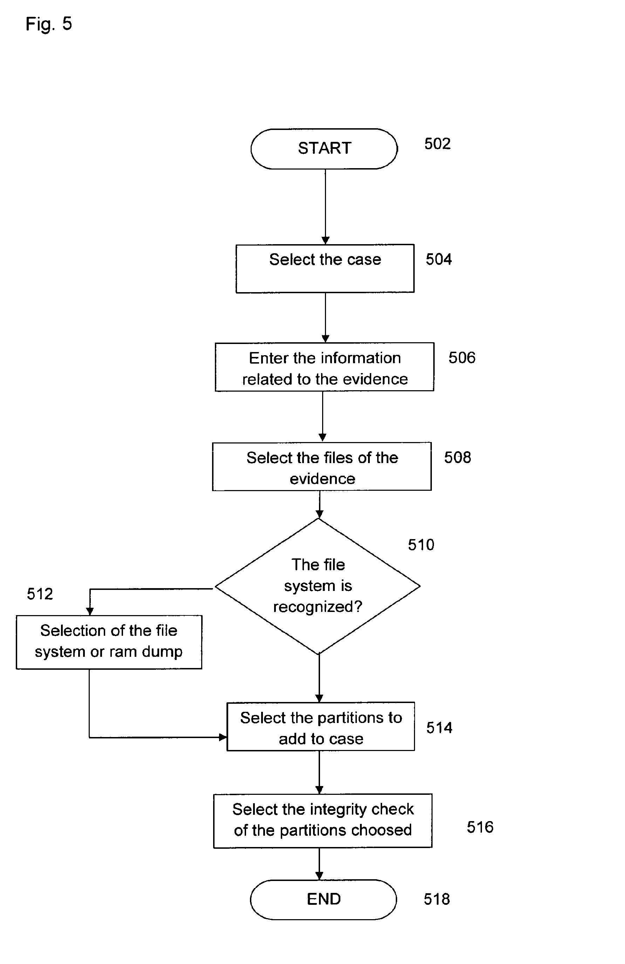

Fig. 5 is a flowchart that starts at step 502 and shows the model execution of the method for adding evidence to a selected case, 504. Step 506 asks the investigator to add general information on the piece of evidence to be included. The method then proceeds to step 508, where the files associated with the evidence are selected. In step 510, the invention identifies the type of file system present in the evidence. If the file system is not recognized, the method proceeds to step 512, where the investigator is asked to select the type of file system for the given evidence. If the file system is recognized, the method proceeds to step 514, where the investigator selects the evidence partitions to add to the case. In the next step, 516, the investigator is able to choose whether or not to apply the integrity check option to any new information added to the case. The method terminates at step 518.

Evidence is added to a case in four steps: entering general evidence information, selecting the evidence files or portions thereof to be added, selecting import mode (symlink or copy, and if the image contains partitions, the operator can select which partitions to add), and choosing whether to calculate hash values for the original evidence (if the investigator does not already have hash values generated, for example, during the acquisitions process). To save the added information, the operator presses the "Add" button.

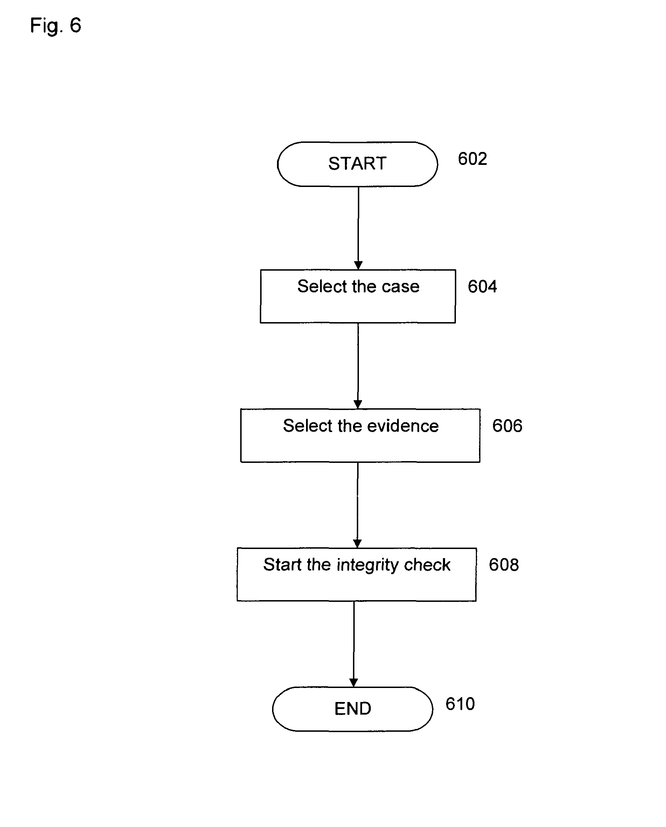

Fig. 6 is a flowchart that shows the model execution of the method for verifying the integrity of a piece of evidence. The method begins with step 602 and proceeds to step 604, where the investigator chooses the case on which he or she wishes to work. The method then continues to step 606, where the investigator selects the evidence that will be subjected to the integrity check, 608. The method terminates at step 610.

The integrity check function is composed of two subsections: one regarding MD5 hash values and the other SHA1 hash values. The buttons allow the operator to calculate-or verify, if hash values have already been calculated-the current hash value of the evidence subject to forensic analysis.

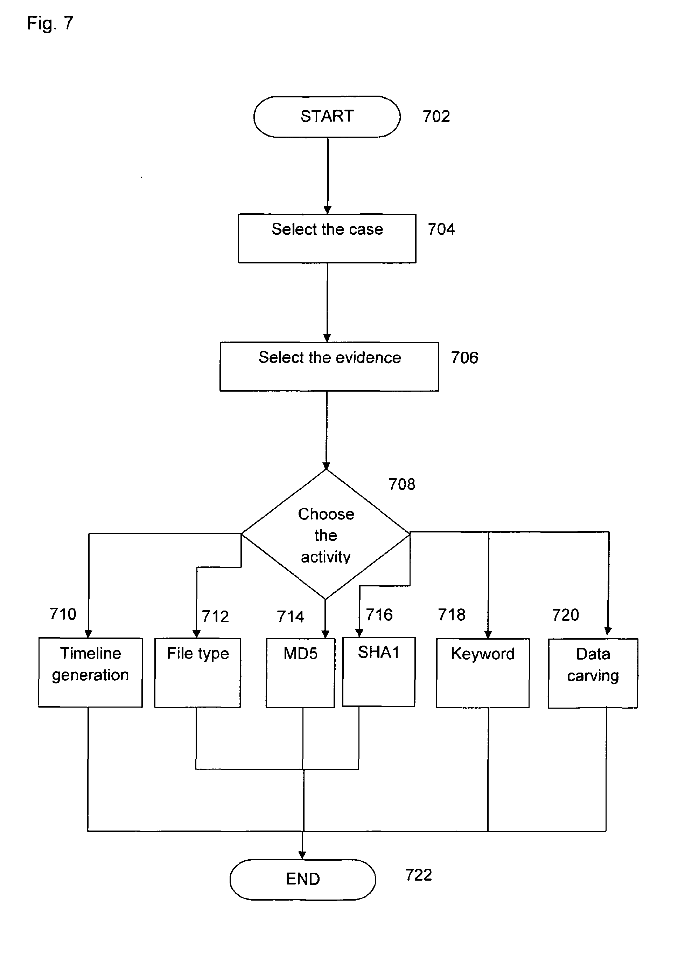

Fig. 7 is a flowchart that shows the model execution of the method for choosing indexing options for a chosen item of evidence. The method begins at step 702. At step 704, the investigator selects the case and at step 706 the item of evidence on which to conduct operations. Step 708 allows the investigator to choose which operation to carry out: timeline generation 710, file type verification 712, MD5 hash value calculation 714, SHA1 hash value calculation 716, keyword extraction 718, or data carving 720. The method ends with step 722.

In the "image indexing operations" section it is possible to generate a timeline of all user actions performed on evidence files, check evidence file type, calculate MD5 or SHA1 hash values for all evidence files, extract keywords from evidence files, and perform data carving operations on the file types selected from the "options" section. Actions are performed by selecting them and then hitting the "start" button. If a component is missing this means that the associated process has already been performed. In this case the date and time of execution will be displayed.

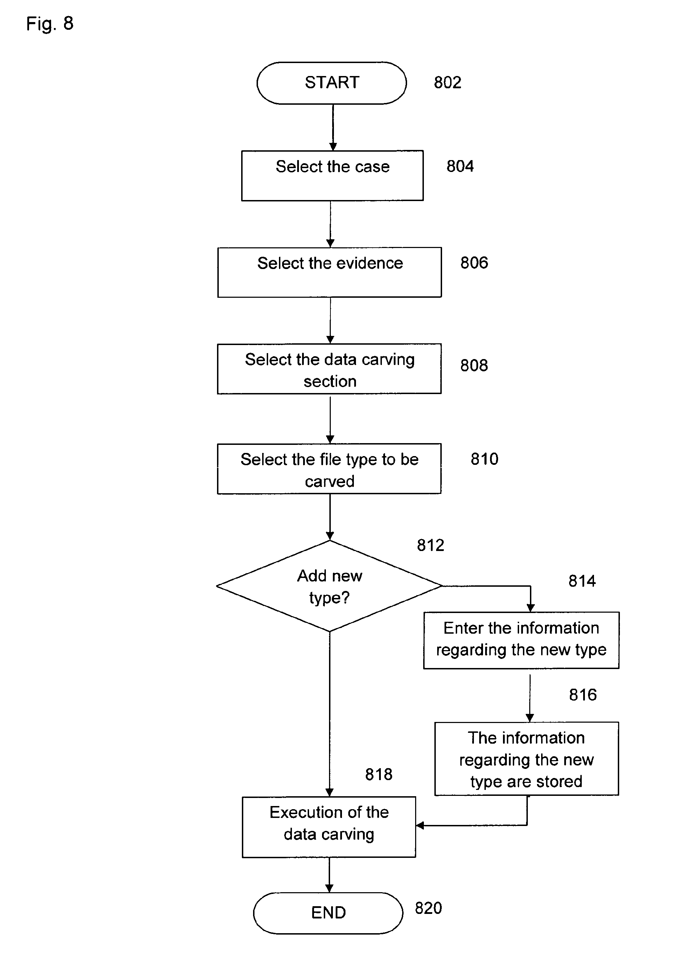

Fig. 8 is a flowchart that shows the model execution of the method for data carving. The method begins at step 802. In step 804 the operator selects the case and in 806 the evidence on which to work. At steps 808 the operator selects data carving section. At step 810, the operator specifies which type of file will undergo data carving. In step 812 the user has the option of adding one or more custom types for the process. If the user adds a new type, the method proceeds to step 814 where information about the new type is requested. The method proceeds to step 816, where the information is saved to the database. Steps 816 and 812 lead to step 818 where the data carving operation is actually carried out. The method terminates with step 820.

The tabs in the data carving section allow the user to view the different categories of preconfigured files included in the invention. For each category selected the individual file types belonging to the selected category are displayed. It is possible to enable data carving for each different file type. By selecting the checkboxes corresponding to the various file types, those file types will be subjected to the data carving process. By selecting the "custom" tab, the operator is able to add customized types for the data carving process. It is possible to display the specific section where information is provided to define a specific file type. After having entered the required information, the operator can save the information to the database.

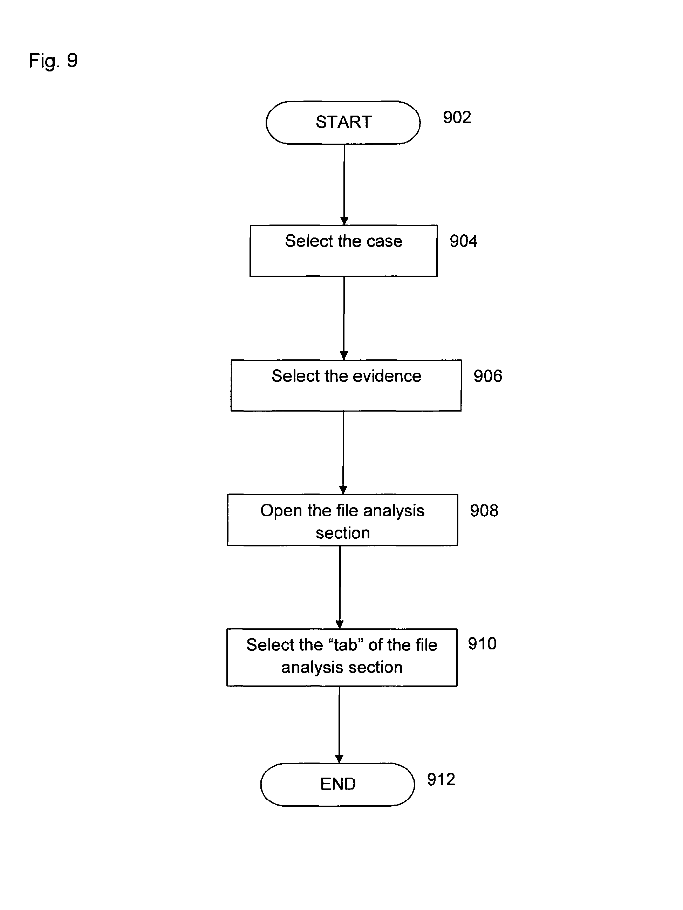

Fig. 9 is a flowchart that shows the model execution of the method for accessing the final analysis section. The method begins at step 902. At step 904, the method asks the operator to select the case and at step 906 the evidence on which to work. At step 908, the investigator accesses the analysis section, where he or she can select the "file analysis" tab in step 910. The method terminates with step 912. The file analysis screen is composed of a section in which the details regarding the evidence being analyzed are shown, a tree where the structure of the folders in a piece of evidence is replicated, and a section highlighting the files obtained via the data carving process. A dedicated subfolder will be created for each file type. The section at the base of the tree provides additional information on the selected folder or different interpretations of the hexadecimal value selected in the section. The screen has other tabs for other types of evidence analysis. In particular, it is possible to perform analyses related to "timeline", "keyword search", "Gallery", "Hashset", "Image details", "Data unit", "Bookmark" and "Reports". The screen also presents the filter and advanced filter functions, recursive display and plugins. The screen also presents statistics on number of files viewed, number of files filtered and number of bookmarked files. The screen displays the files found in the selected folder on the tree. The screen also provides the option of viewing file contents in ASCII, Hexadecimal, ASCII String or Preview, exporting the file to a disk and bookmarking the file.

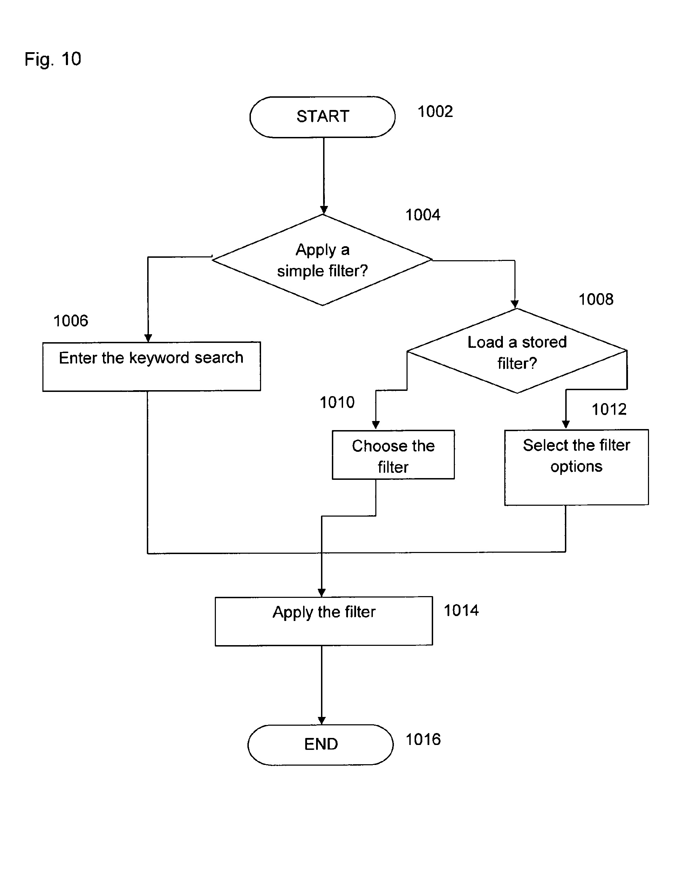

Fig. 10 is a flowchart that shows the model execution of the method for applying a filter in the file analysis section. The method begins at step 1002. In step 1004, the method offers the option of a simple or an advanced filter. In the former case, the method proceeds to step 1006 where the operator has to supply a search keyword. In the latter case, the method proceeds to step 1008 where the user is asked whether he or she wishes to load a previously created filter or create a new one. If the user chooses to load a previously created filter, the method goes to step 1010. Otherwise it goes to step 1012 where the user is asked to provide the criteria for the new filter. Steps 1006, 1010 and 1012 lead to step 1014, where the selected filter is applied. The method terminates at step 1016.

The invention provides for two types of filters: basic and advanced. The basic filter operates on the basis of the string in the user input field. The filter application results are shown in the section containing the list of files. Advanced filters allow filtering based on file type or timestamp (i.e., date/time of file creation or modification, or modification of file metadata). After having created the desired filter, the template may be saved or a previously created template may be loaded. After having created or loaded a filter the application process may continue.

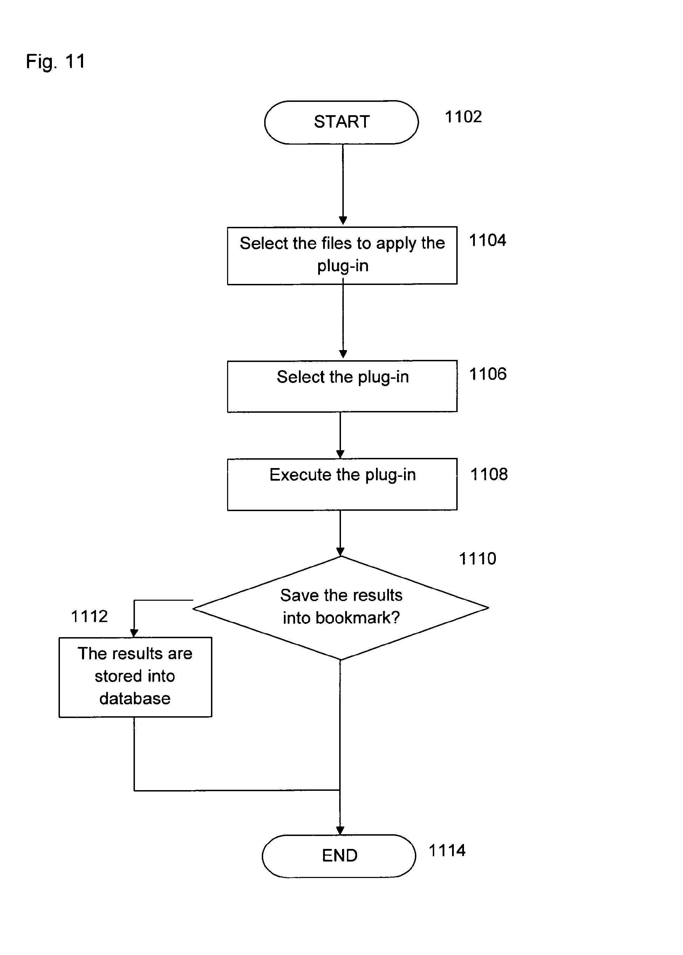

Fig. 11 is a flowchart that shows the model execution of the method for applying plug-ins to the file analysis section. The method begins at step 1102. At step 1104, the investigator selects the files to which he or she wishes to apply the plug-in. The method then proceeds to step 1106, where the investigator is asked to select the plug-in to use on the selected files. The method applies the plug-in in step 1108 and upon completion asks the investigator 1110 if he or she wants to save the results in the bookmarks section. If so, the method proceeds to step 1112, where the output is saved to the database. The method terminates at step 1114.

To apply a plug-in, the operator must access the dedicated screen. To select the files to which the plug-in will be applied it is necessary to activate the plug-ins associated with each file. After the files to analyze and the plug-in checkbox have been selected, the screen will come up in which it is possible to choose the category and options for running the plug-in. It is also possible to allow saving of plug-in output directly to the bookmarks section.

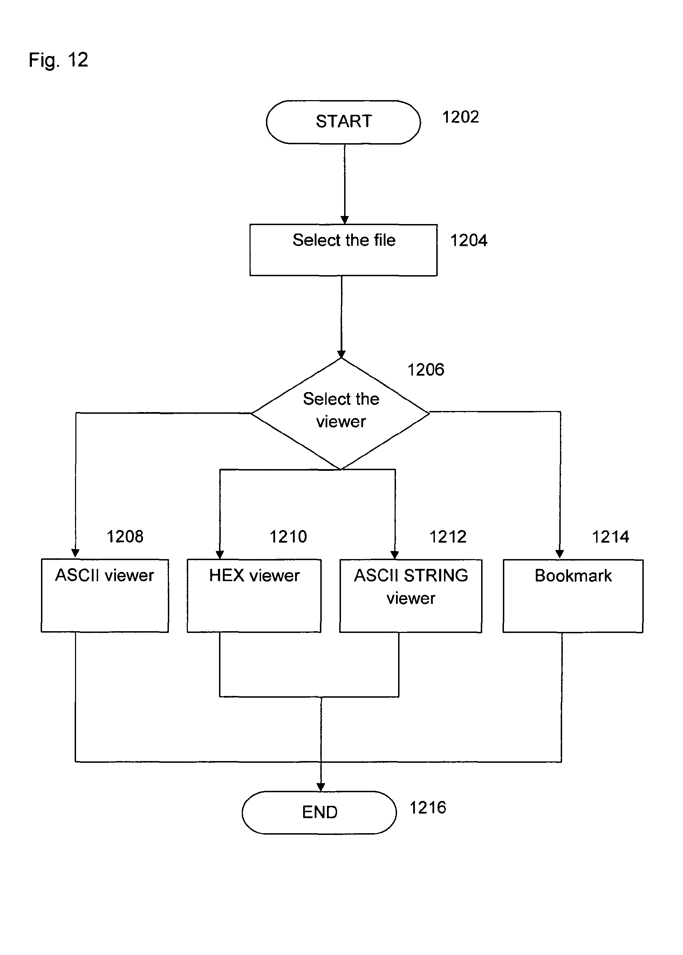

Fig. 12 is a flowchart that shows the model execution of the method for viewing and bookmarking the information contained in a file. The method begins at step 1202. At step 1204 the investigator selects the file to be analyzed. In step 1206, the investigator selects the view mode or enters information necessary for bookmarking the selected file. The method continues to step 1208 if ASCII is selected, 1210 if hexadecimal format is selected, 1212 if ASCII String is chosen, and 1214 if the choice was made to add the selected file to the evidence bookmarks. The method terminates at step 1216.

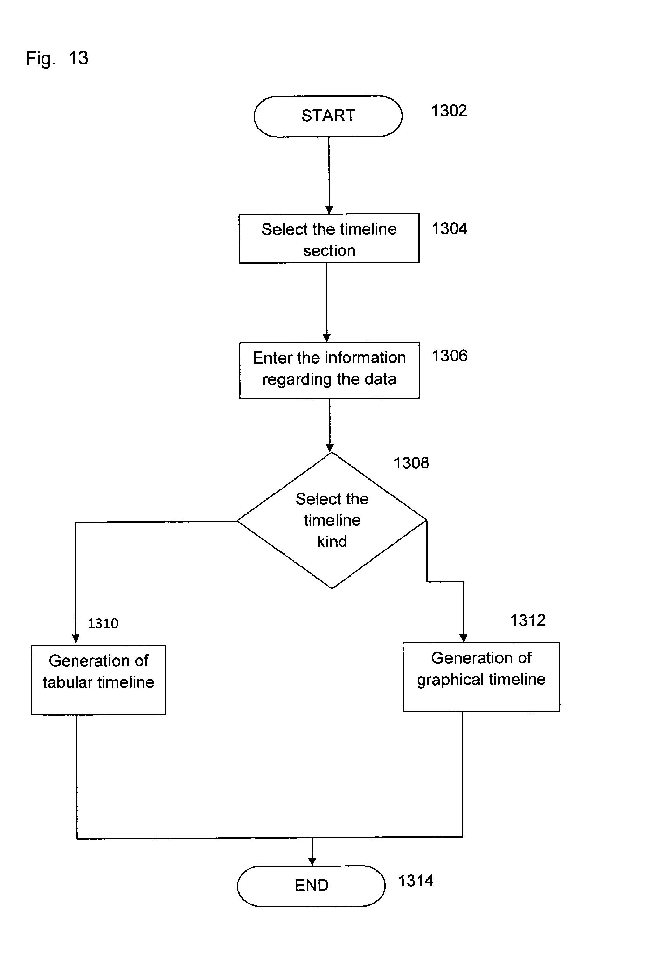

Fig. 13 is a flowchart that shows the model execution of the method for accessing and executing the timeline analysis process. The method starts with step 1302 and continues to step 1304, where the investigator selects the timeline tab. The method proceeds to step 1306, where the investigator provides specifics and any filters to be applied to the representation of user activity. In step 1308 the investigator specifies timeline format: tabular 1310 or graphic 1312. The method terminates at step 1314.

After having selected the timeline section, it is possible (if the image to be analyzed provides for it) to choose the partition for which a timeline will be generated. It is also possible to select a range of dates within which the examine the events that took place on files contained in the evidence image. After having specified these options, it is possible to choose whether to generate the timeline as a table or as a graph. The timeline configured accordingly is generated by pushing a button. If a graphic timeline is chosen the section displayed a specific mask, while if a tabular format is selected, the section will be another one. As for file analysis, in the tabular timeline it is possible to select a file for content analysis or proceed to the bookmarking step. Other options are available for the graphic section which make it possible to filter actions or select the display scale.

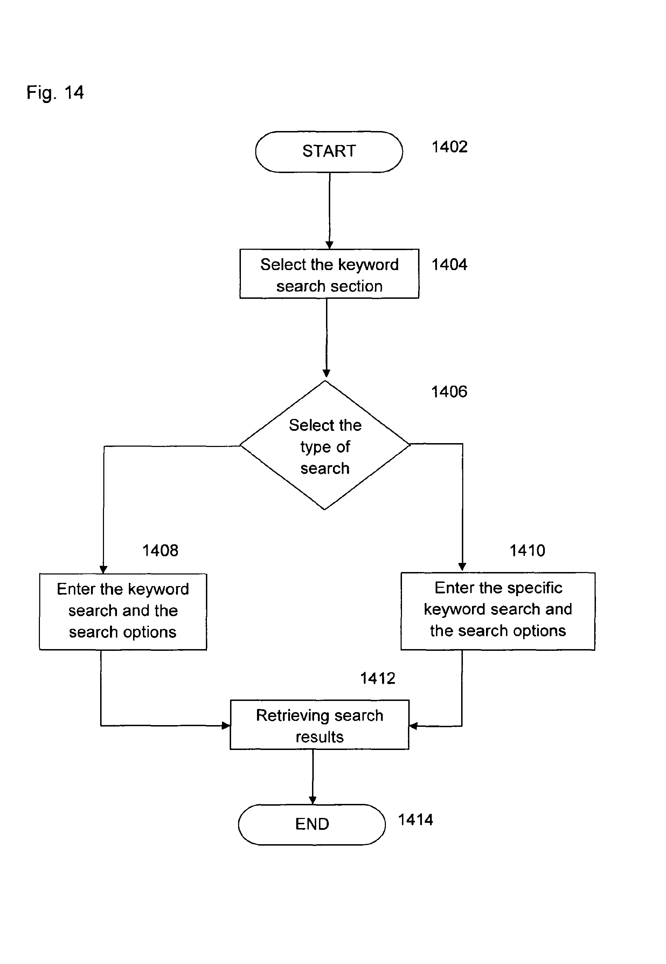

Fig. 14 is a flowchart that shows the model execution of the method for accessing the keyword search function and performing an analysis. The method begins with step 1402 and proceeds to step 1404, where the investigator selects the tab associated with the keyword. The method continues to step 1406, where the investigator decides whether to perform a keyword search on the indexed content or directly on the image in RAW ("Live") format. In the former case, the method proceeds to step 1408, where the keyword for the search is entered. In the latter, the method proceeds to step 1410, where the investigator supplies the specific keyword for the search process. For both steps 1408 and 1410, the investigator is able to add any other search parameters. Both steps terminate with step 1412, where the search results are displayed. The method terminates at step 1414.

The keyword section is divided into two macro sections: indexed search and live search. Keywords to search for and additional options, such as regular expressions, may be specified for both sections. There are also additional options for the "live" section. After having specified the keyword to be sought and any additional options, it is just necessary to press the button to initiate the search. Both "indexed" and "live" search results are shown in the same way with file name and sector or metadata in which the hit was found. The results screen also provides the possibility of viewing the file contents as described above or of proceeding with the bookmarking process.

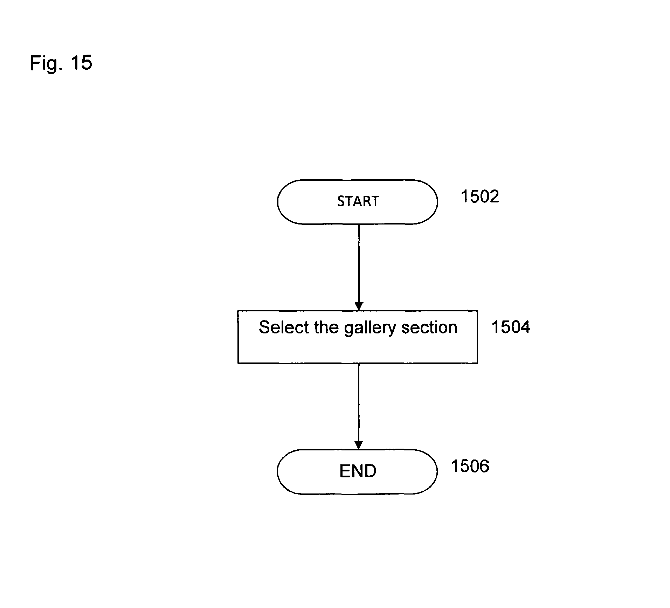

Fig. 15 is a flowchart that shows the model execution of the method for accessing the picture gallery section. The method starts at step 1502 and proceeds to step 1504, where the investigator selects the gallery tab. The method terminates at step 1506.

The picture gallery is composed of two sections: one which displays the folder tree of the image to be analyzed, and the other with thumbnails of the files contained in a selected folder. For each thumbnail it is possible to recover information, view the image in original size or export the file to a disk. It is also possible to bookmark any of the thumbnails.

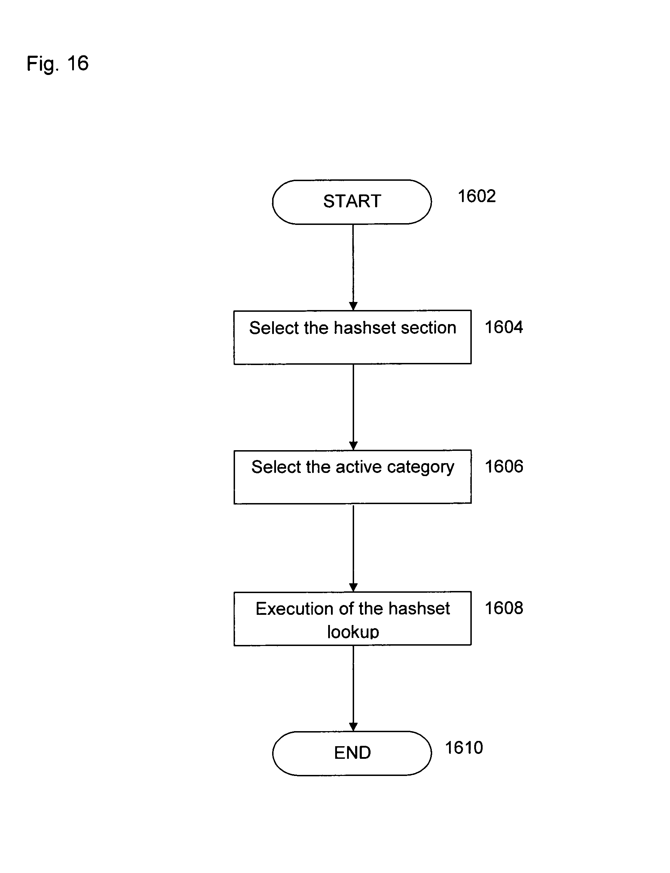

Fig. 16 is a flowchart that shows the model execution of the method for applying hashset analysis to a piece of evidence. The method begins with step 1602 and proceeds to step 1604, where the investigator selects the hashset tab. At step 1606, the investigator selects the category of hashset to apply to the selected evidence. In step 1608, the hash values are checked against those calculated for the evidence files. The method terminates at step 1610.

The hashset section contains the list of the categories of hashset specified in the settings section, displaying for each of them an indicator that is red or green to signal whether the category is activated or not for the analysis of the selected image. It is sufficient to enable a hashset category to apply it. After having completed the lookup process in the file analysis section, the corresponding category will be displayed in the "hashset" column.

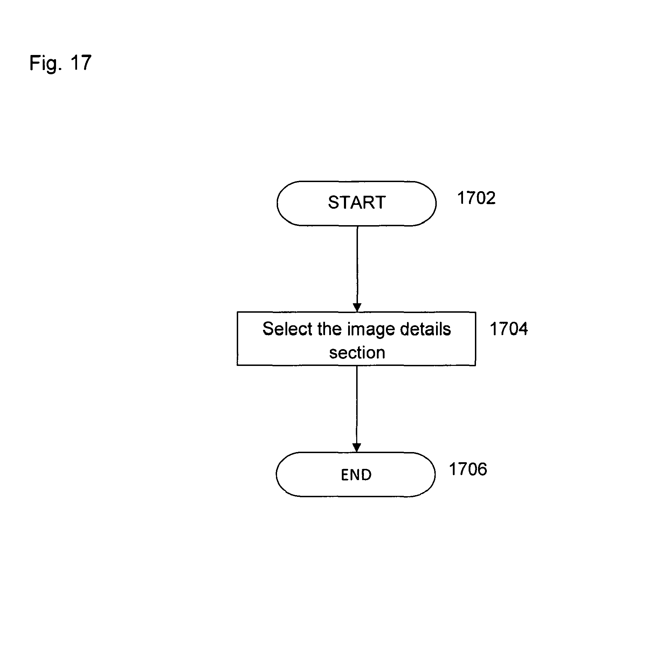

Fig. 17 is a flowchart that shows the model execution of the method for accessing the picture gallery section. The method begins at step 1702 and proceeds to step 1704, where the investigator selects the image details tab. The method terminates at step 1706.

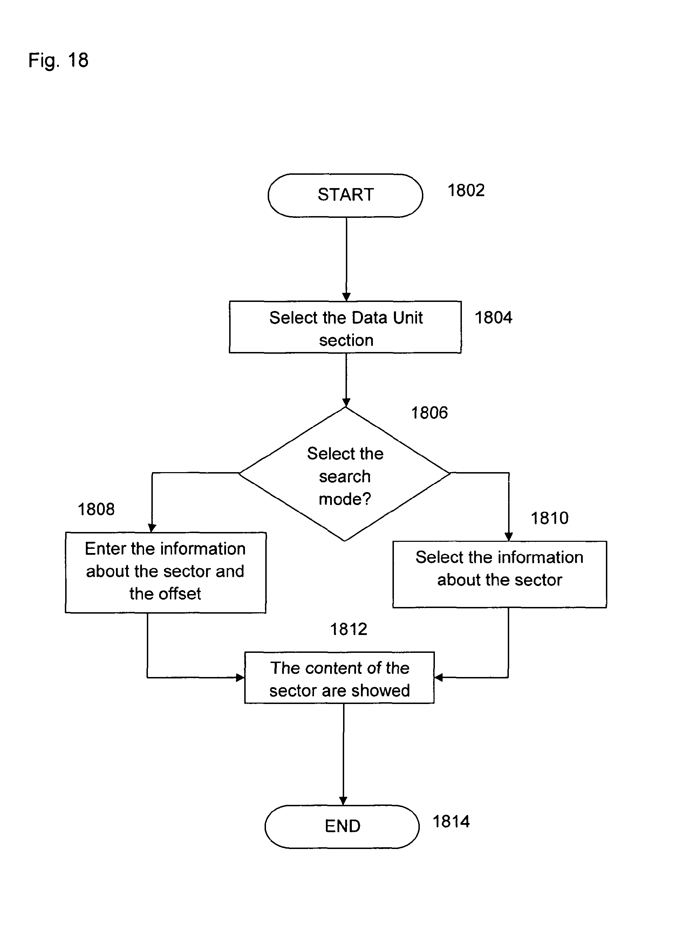

Fig. 18 is a flowchart that shows the model execution of the method for accessing the data unit function. The method begins at step 1802 and proceeds to step 1804, where the investigator selects the data unit tab. The method proceeds to step 1806 where the investigator can decide whether to proceed with the search via sectors or else analyze the allocation list. In the former case, the method proceeds to step 1808, where information such as start sector and number of sectors to view may be specified. If the investigator instead chooses to access the allocation list section, the method proceeds to step 1810 where the investigator chooses which sector to view. Both steps 1808 and 1810 proceed to step 1812, where the sectors requested in the previous sections are displayed. The method terminates at step 1814.

The data unit function is composed of two sections: one is for searching and the other is an allocation list. In the search section, investigators can specify the sector number and number of sectors to display. Once these choices have been made the results are displayed by pressing the specific button. It is possible in this screen to modify the view mode and move among the displayed sectors. The allocation list section differs in that it displays the list of sectors in order of allocation.

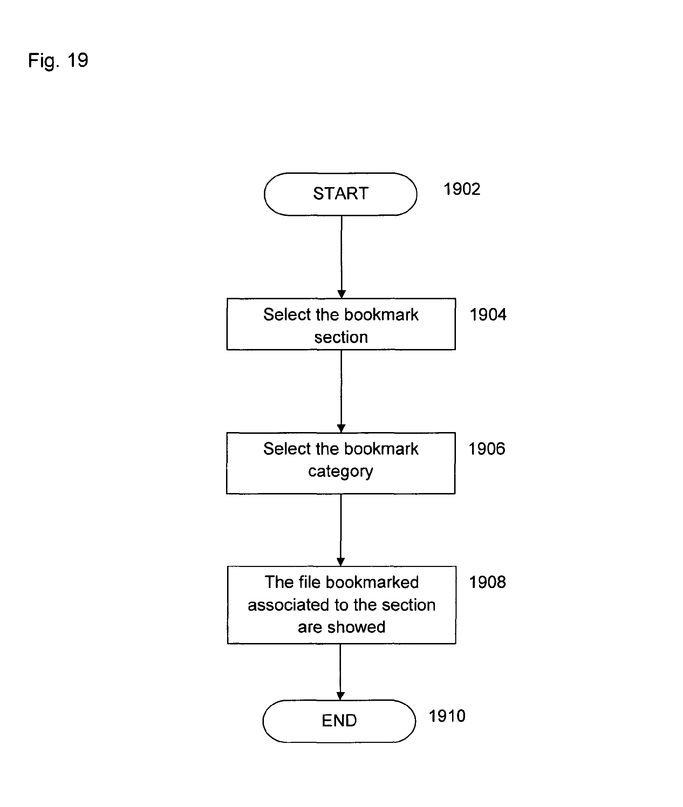

Fig. 19 is a flowchart that shows the model execution of the method for accessing and managing the bookmark section. The method begins at step 1902 and proceeds to step 1904, where the investigator selects the bookmark tab. The method proceeds to step 1906, where the investigator selects the type of bookmark he or she wishes to access. In step 1908 the method displays all the files in the given bookmark category. The method terminates at step 1910.

The bookmark section displays all the files bookmarked in the previous sections. It displays the categories assigned when each bookmark was created. The files belonging to any given category are displayed when the category is selected. For each file it is possible to access the specific section where the contents can be viewed and modify the viewing mode.

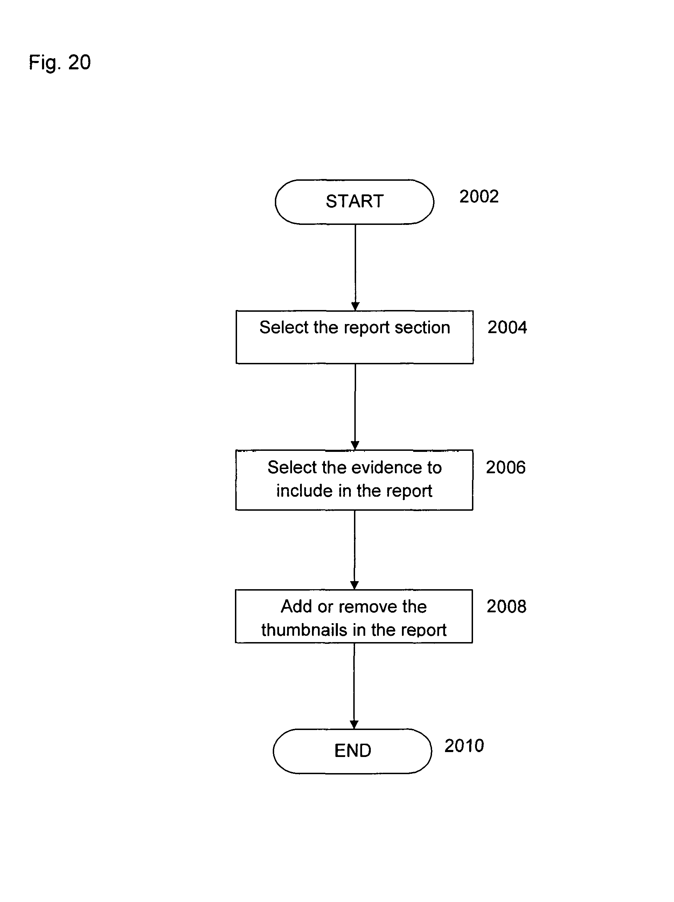

Fig. 20 is a flowchart that shows the model execution of the method for accessing and using the reporting section. The method begins with step 2002 and proceeds to step 2004, where the investigator chooses the report tab. The method proceeds to step 2006, where the investigator may choose which images to include in the report. At step 2008 the investigator is able to choose whether to enable the inclusion of thumbnail images in the report. The method terminates with step 2010.

The reporting section is accessible from the specific tab. The button allows investigators to access the new report creation section. During the new report creation process, the investigator may choose whether to include thumbnails for graphic files and then choose the images for which to generate a report. The new reports will be added to the report list.

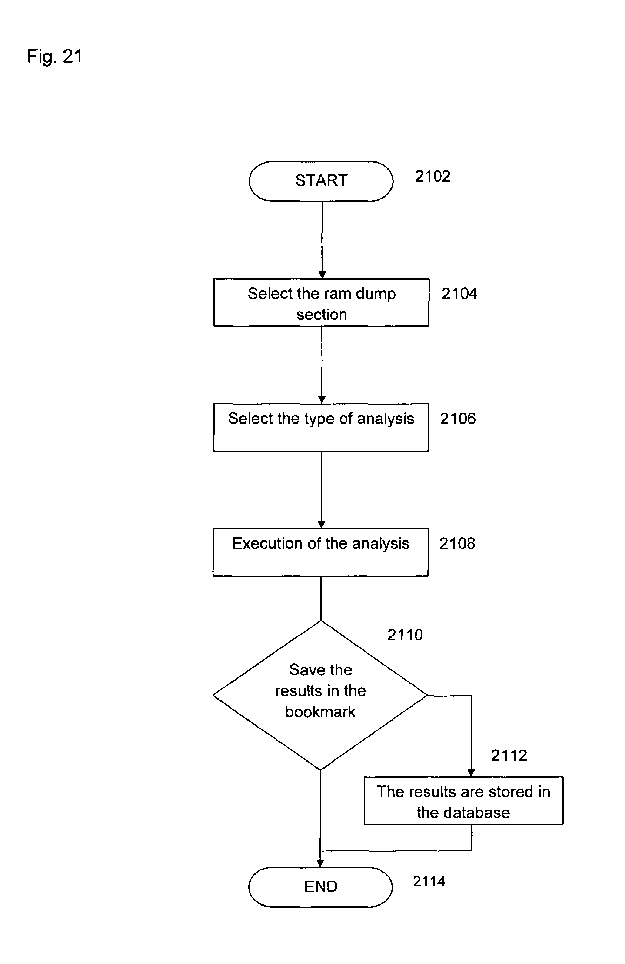

Fig. 21 is a flowchart that shows the model execution of the method for accessing and managing the RAM dump analysis section. The method begins with step 2102 and proceeds to step 2104, where the investigator selects the RAM dump analysis tab. The method then continues to step 2106, where the investigator can choose the type of analysis to perform on the selected RAM dump. In step 2108 the method produces the output and proceeds to step 2110, where the investigator has the choice of saving the result as a bookmark. If the investigator chooses to do so, the method proceeds to step 2112, where the results are stored to the database. The method terminates with step 2114.

If it is not possible to recognize the file system of the image being analyzed and the investigator adds a RAM dump, the instrument activates a dedicated section.

The RAM analysis menu makes it possible to view and execute all actions. Analysis results can be displayed and bookmarked in a dedicated section.

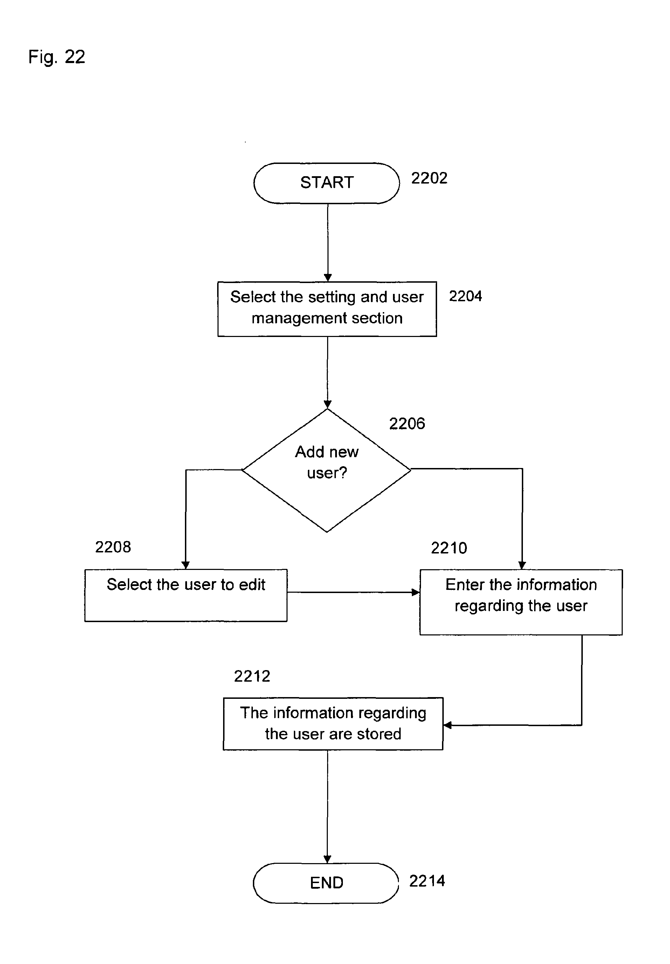

Fig. 22 is a flowchart that shows the model execution of the method for managing investigators via the invention. The method begins with step 2202 and proceeds to step 2204, where the administrator selects the investigators tab. At step 2206 the administrator decides whether he or she wants to create a new investigator or modify the profile of an existing investigator. In the latter case, the method proceeds to step 2208 where the investigator can be selected. Steps 2206 and 2208 proceed to step 2210, where the administrator enters information associated with a new investigator. At step 2212 the method stores the entered information to the database. The method terminates with step 2214.

The investigators section contains the list of investigators registered on the invention. A new investigator can be added simply by providing the requested information. The summary screen displays the contextual information for each investigator, with options to display information or to block access to the invention. The section illustrated in the figure is accessible only to the administrator.

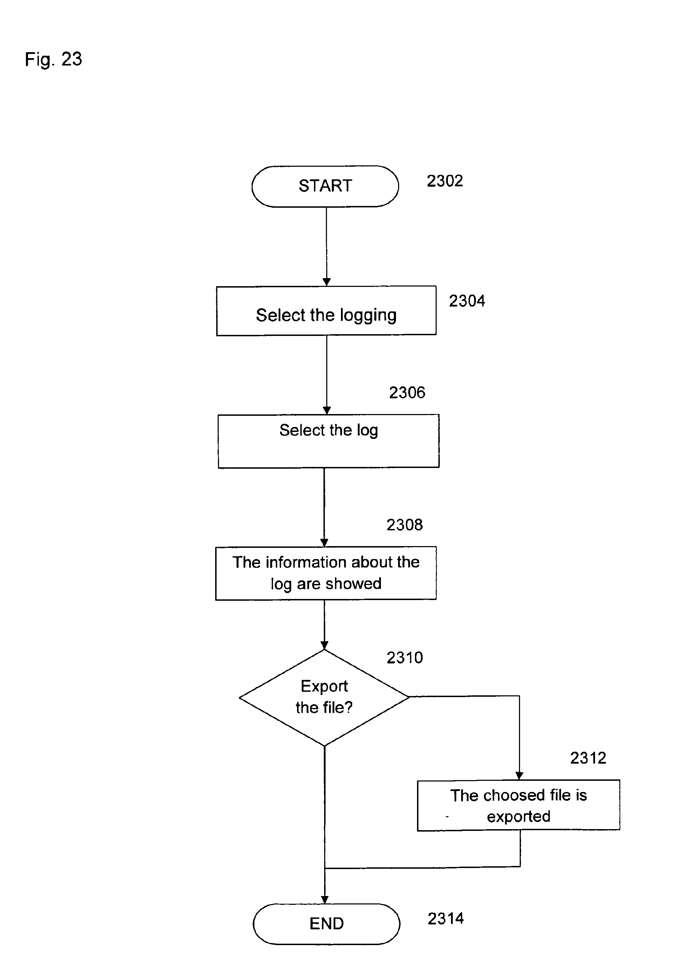

Fig. 23 is a flowchart that shows the model execution of the method for accessing the logging section. The method begins with step 2302 and proceeds to step 2304, where the investigator selects the log management tab. The method proceeds to step 2306, where the investigator chooses which log to work on before continuing to step 2308, where the information contained in the log is displayed. At step 2310 the investigator is given the option of exporting the file. If the investigator chooses to do so, the method proceeds to step 2312, where it exports the file to the investigator's computer. The method terminates with step 2314.

The logging function is composed of two main sections: the list of consultable logs and the section in which each selected log is displayed. Each log can be exported in log format. The logging function is accessible only to the administrator.

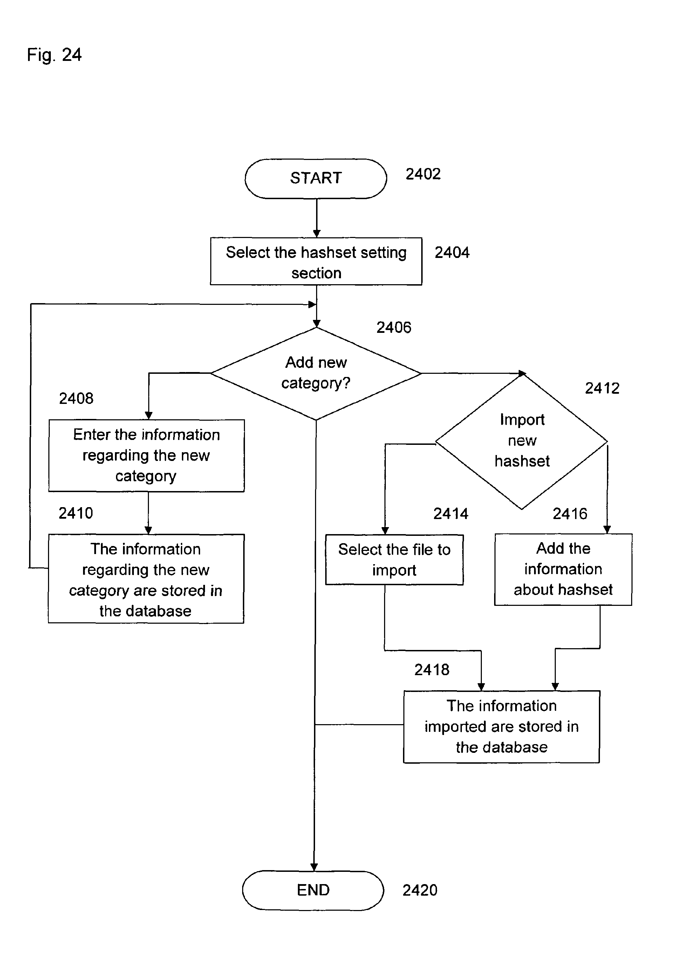

Fig. 24 is a flowchart that shows the model execution of the method for managing hashset categories and values. The method begins with step 2402 and proceeds to step 2404, where the investigator selects the hashset management tab. In step 2406 the investigator has the option of creating a new category or entering new hash values. If the investigator chooses to create a new category, the method proceeds to step 2408, where information on the new category is requested. The method continues on to step 2410 where the information is saved to the database. The method returns to step 2406. If the investigator chooses to enter new hash values into an existing category, the method proceeds to step 2412. Here the investigator has the choice of importing a hashkeeper file or manually entering the hash values. In the former case the method proceeds to step 2414 where the file to import is chosen. In the latter case, the method proceeds to step 2416 where the invention requests the hash values. Both steps 2414 and 2416 proceed to step 2418 where the method saves the values to the database. The method terminates with step 2420.

The hashset section displays the list of categories in the database. By selecting a specific category, the statistics relating to the highlighted category are displayed in the section. There are two ways to add a new hash value: automatically or manually. To add values automatically, the corresponding option must be selected, the files to import must be selected, the category to which the new hash values will belong must be selected (if a new category is created it is sufficient to provide the requested information), and the classification of the new hash values that are being imported must be selected before executing the save function. For manual entry of hash values it is necessary to specify the number (n) of values to add; n lines will then be created. For each line it is possible to specify the category, hash value, file name and classification.

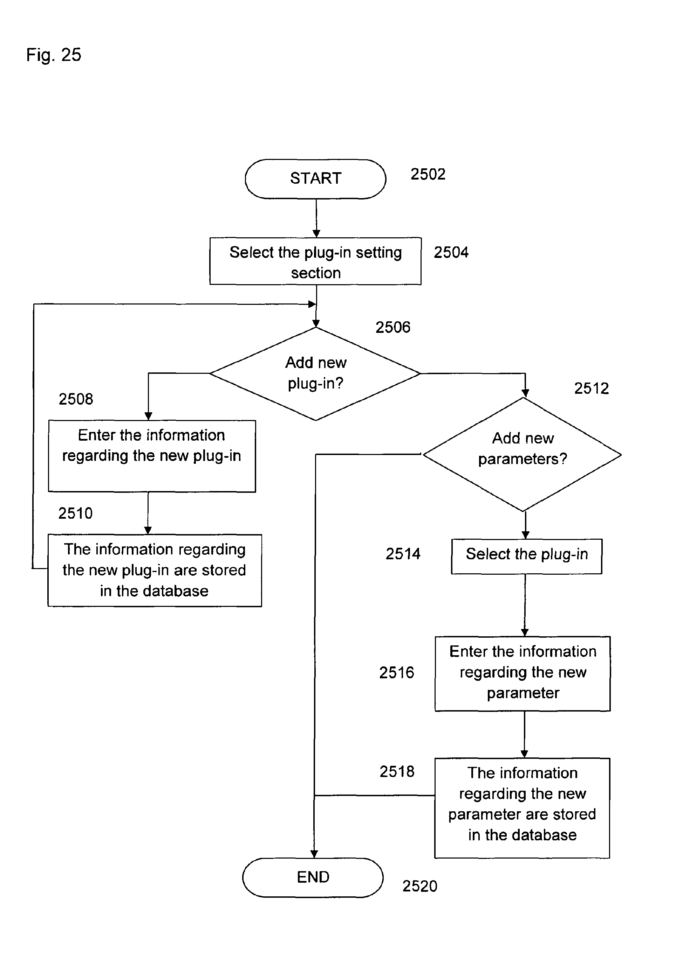

Fig. 25 is a flowchart that shows the model execution of the method for handling plug-ins. The method begins with step 2502 and proceeds to step 2504, where the investigator selects the plug-in tab. At step 2506 the investigator has the option of creating a new plug-in or entering new parameters for existing plug-ins. In the former case, the method proceeds to step 2508, where information on the new plug-in is requested. The method then continues to step 2510, where the information is saved to the database. The method then returns to step 2506. If the investigator wishes to enter new parameters for existing plug-ins the method proceeds to step 2512. Here the investigator has the choice of adding a parameter or terminating the process. If the investigator chooses to add a new parameter the method proceeds to step 2514, where the plug-in corresponding to the added parameter is chosen. The method proceeds to step 2516, where the information associated with the new parameter is entered, and then to step 2518, where the method saves the values to the database. The method terminates with step 2520.

The plug-in function comprises a main section in which the installed plug-ins are displayed, each one accompanied by its details and parameters. To add a new plug-in it is sufficient to provide basic details such as name, brief description and default path. After adding the plug-in it is necessary to specify the parameters modifying the basic command.

## Claims

1. A method for the control, management and analysis of information security cases **characterized in the fact that** it comprises the creation of a structured record (case) including the specific information associated with an information security case; electronic storage of one or more items of digital evidence; and Association of said items with a specific case.

2. A method for the control, management and analysis of information security cases as described in claim 1, **characterized in the fact that** includes the process of acquiring information associated with cloned disks of the original evidence.

3. The A method for the control, management and analysis of information security cases as described in claim 2, **characterized in the fact that** comprises the acquisition and pre-processing of information contained within the evidence.

4. A method for the control, management and analysis of information security cases as described in claim 1, **characterized in the fact that** entails a structure created for storing information based on a relational database.

5. A method for the control, management and analysis of information security cases as described in claim 1, **characterized in the fact that** for the addition of an item of digital evidence it is necessary to create an element, in this case a case.

6. A method for the control, management and analysis of information security cases as described in claim 1, **characterized in the fact that** includes the creation and definition of roles for each operator with access privileges commensurate to their roles. Every role has an associated access level.

7. A method for the control, management and analysis of information security cases as described in claim 1, **characterized in the fact that** includes the creation of unambiguous labels for each element within the invention.

8. A method for the control, management and analysis of information security cases as described in claim 1, **characterized in the fact that** includes management of a timeline in either graphic or tabular format.

9. A method for the control, management and analysis of information security cases as described in claim 1, caractherized in the fact that includes the management and sharing of notes collected during the investigation process.

10. A method for the control, management and analysis of information security cases as described in claim 1, **characterized in the fact that** includes management of the plug-in section.

11. A method for the control, management and analysis of information security
cases as described in claim 1, **characterized in the fact that** includes management of the hashset section.

12. A method for the control, management and analysis of information security cases as described in claim 1, **characterized in the fact that** includes the generation and management of reports in simple format or with advanced security options.

13. A method for the control, management and analysis of information security cases as described in any previous claims, **characterized in the fact that** the hardware for the invention comprises a server with an installed DBMS for case management; a memory for saving cases; one or more client computers used as clients for entering digital evidence;

14. A method for the control, management and analysis of information security cases as described in claim 13, **characterized in the fact that** provides for the automatic creation of encrypted backups.

15. A method for the control, management and analysis of information security
cases as described in claim 13, **characterized in the fact that** must offer a sufficient performance level to allow navigation using commonly available browsers.
